# EUROPEAN PATENT APPLICATION

(11) **EP 1 443 427 A1**
(43) Date of publication of application: **04.08.2004**
(21) Application number: 03290217.3
(22) Date of filing: 29.01.2003
(51) Int. Cl.: G06F 17/30

(54) **Maintenance of information retrieval systems using global metrics**

(71) Applicant: Hewlett-Packard Company, A Delaware Corporation, Palo Alto, CA 94304 (US)
(72) Inventor: Delic, Kemal, 38000 Grenoble (FR); Douillet, Laurent, 38650 St Martin de la Cluze (FR)
(74) Representative: Lloyd, Richard Graham

(57) **Abstract**

Process for measuring the performance of a information retrieval system comprising a repository of documents or files associated with a search engine; said process involving the steps of:
- recording the individual appreciation or flags individually assigned by the users to the documents being output to the users; ;
- computing at least a first and a second metrics respectively representative of the number of positive flags and the rank of the documents having received positive flags and monitoring changes to said at least first and second metrics;
- displaying information to the user in response to the detection of changes brought to said first and second metrics. There is also provided an improved maintenance process of a repository of documents.

## Description

### Technical field of the invention

The invention relates to information retrieval and more particularly to processes for measuring the performance of, and maintaining, an information retrieval system.

### Background art

The progress of information technology and the development of computer systems allows the design of large digitally-stored knowledge bases containing thousands of documents and electronic files. Sophisticated techniques are used for collecting, storing, sorting and quickly retrieving documents contained within the repository.

Help-desk services are but one example of a typical environment where Information retrieval techniques play a significant role. The daily work of help-desk analysts is supported by computer systems containing tens of thousands of problem solving documents. At the request of a customer, a helpdesk analyst has to examine a problem and rapidly provide a solution. To achieve this, the helpdesk analyst typically has to abstract the problem into a few keywords and search for a solution in an on-line knowledge base.

However, retrieval techniques based on keyword searches usually return, by far, too many documents. Practically, only a small proportion of the listed documents are really of any use to the helpdesk analysts - a phenomenon that inevitably reduces the effectiveness of the service provided to the customer. In most cases, first line agents of the helpdesk services have very little time to find an effective and practical solution to each problem, and the use of traditional techniques based on keyword searches provides too much noise and outputs a huge number of documents which cannot easily be exploited. The effective use of a help-desk knowledge base or a repository of documents which contains a huge number of references and documents tends to rapidly become very difficult in practice.

In consequence, help-desk knowledge bases, and more generally any similar such repository of documents, need to be closely monitored, evaluated, and maintained to make sure that they match the requirements of their users.

### Summary of the invention

A first aspect of the present invention provides a process for measuring the performance of an information retrieval system comprising a repository of content items associated with a search mechanism, said process comprising:
- when a content item is accessed by a user, recording an appreciation assigned by the user to that content item in relation to the access of the document;
- and using the recorded appreciations to calculate at least one global metric for the performance of the system.

In preferred embodiments, the appreciation takes the form of a flag being capable of being at least positive or not positive and the recorded appreciations are used to compute at least a first metric representative of, or derived from, a ratio of of positive to non-positive appreciations for the repository. In addition, where the search mechanism returns a rank for retrieved content items, the recorded appreciation can comprises the rank of content items and the recorded appreciations are used to calculate a second metric representing, or derived from, an average rank of the content items when each such content item receive positive appreciations.

It can be been seen that the first metric reflects the proportion of items that are actually found in practice to be useful and the second metric reflects the overall ease with which useful documents were accessed, it being assumed that a user will normally access a ranked list in the order of the ranking.

The appreciations can be stored, for instance, in a database.

The process can further comprise detecting changes to at least one global metric and launching of a maintenance process of said repository in response to said detected changes.

There is also provided an enhanced process for maintaining a repository of documents associated with a search engine, wherein the process involves the steps of:
- recording the individual appreciation or flags individually assigned by the users;
- computing at least a first and a second metrics representative of the relevance of said repository; said first metrics being computed from the number of documents having received positive flags and said second metrics being representative of the average rank of the documents having received positive flags from the users;
- controlling an action brought to said repository in response to change brought to said first or said second metrics.

As the size of this repository increases the process still provides easy monitoring and maintenance of the repository by giving access to the first and second metrics so that the system administrator can easily keep control of the update of the database or repository.

In one embodiment, the update of the repository is controlled in response to the measurement of the above mentioned first and second metrics. In particular, there is provided a process for automatically controlling the publishing of new documents within the repository in response to the detection of a change in the above mentioned metrics.

In one embodiment, there is provided a graphical user interface which allows the administrator to display the first and second metrics in parallel with the different actions which can be provided to the different documents, or bundles of documents to be incorporated within the database or to be deleted from the database.

Another aspect of the invention provides an information retrieval system comprising: a repository of content items associated with a search mechanism; a user interface for presenting a content item to a user and for enabling the user to record an appreciation for that content item in relation to the access of the document; and a management element for using the recorded appreciations to calculate at least one global metric for the performance of the system.

### Description of the drawings

An embodiment of the invention will now be described, by way of example only, with reference to the accompanying drawings, wherein:
Figure 1 illustrates a first embodiment of a monitoring process in accordance with the invention.
Figure 2 illustrates a maintenance process taking advantage of first and second metrics.
Figure 3 shows an illustrative example of a screen used for recording the appreciation flags.
Figure 4 is a flow chart illustrating the process executed in response to the detection of a change to the first and second metrics.
Figure 5 illustrates an example of a database record of the flags and access information.

### Description of the preferred embodiment of the invention

For the sake of clarity, the process and apparatus will be more particularly described in relation to the organization of a repository of problem-solving documents for the organization of a help-desk service or hotline service in a network environment. In a process of solving customer problems, help desk analysts access a database repository containing tens or hundreds of thousands of problem-solving documents. Such an arrangement is usually referred to as a knowledge base.

In this example, the content items are stylized documents describing the most frequent problems and solutions encounted. Each help desk analyst abstracts each problem into a small number of keywords and the system returns a relevance-ordered list of possible problem-solving documents. After accessing and reading some of them, help-desk analysts may find a solution to the problem or at least the problem solving process could be progressed by the documents read. In this case, analysts are asked to flag (mark) these documents as "Problem Solved" or "Helpful" (Good Flags). If a document is not helpful, the document is flagged as "Bad", at which point the following questions are asked also: "Incorrect ?", "Out of date ?", "Out of context ?" etc. All analysts are asked to flag/mark systematically all documents that are read. This creates the basis for a knowledge-base maintenance process which will remove knowledge-base "deadwood". The ultimate objective is to have knowledge-base with high proportion of the documents being flagged as good.

Help desk environments generally experience a very high turnover of analysts, as their job is very tough and challenging. As a consequence, not only is the help desk knowledge base exposed to daily content changes and system redesign improvements, but users are also impacted by the learning process of the analysts themselves. In such a situation, it is a challenge to judge the quality of the help-desk knowledge-base for a constantly changing user population and it is difficult to establish if redesign of the system has improved or worsened problem solving performance.

To address this extremely complex and intertwined domain there will be described a new way of measuring the whole adequacy of the repository, taking into account both the perception of the latter by the users and the intrinsic quality of the database content.

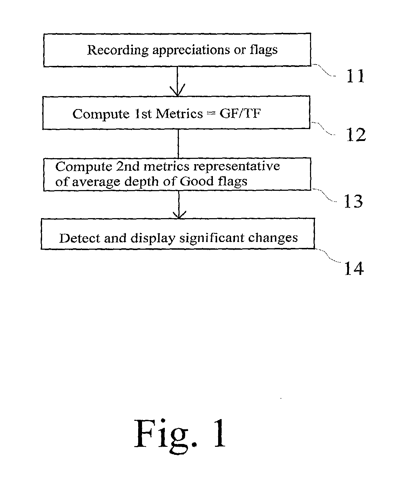

With reference to figure 1, there will now be described an evaluation process for the repository of problem-solving documents in one preferred embodiment.

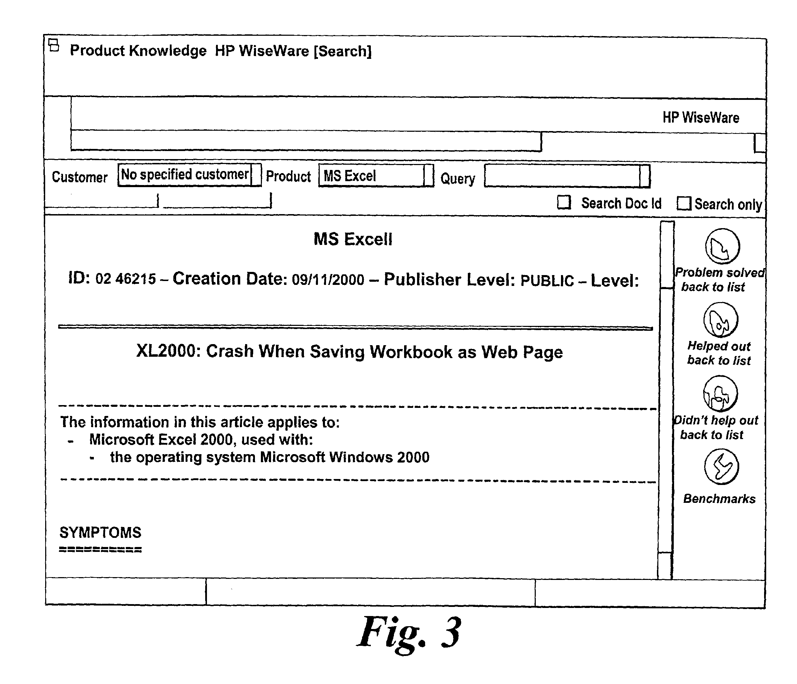

The process is based on the monitoring and tracking of flags which are provided by the users of the information retrieval system, in the present example a set of help-desk agents. For this purpose, in step 11, all the flags received are systematically recorded as *events* in a database. Figure 3 shows a example of a display screen that systematically invites the user of the repository to assign a flag, either positive or negative.

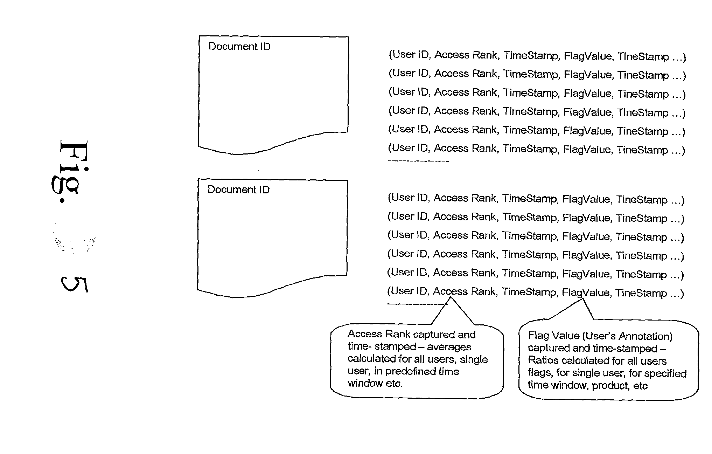

Based on the assigned flags, there is developed a database of flagging events and associated information described below - such as illustrated in figure 5. The flagging process is then used, by for instance a suitably arranged management element of the system, for systematically computing a first and a second metric which take into account of the relevance and quality of the repository considered as a whole.

As shown in figure 5, it can be seen that various elements of information can be associated within each flagging event recorded in the database, such as, for instance the user identifier, the access rank of a document which is accessed, timestamp information and the flag values. The recordal of each flagging events separately avoids the need to resolve the contradiction between contradictory flagging of the same document and represents an evaluation of the relevance and quality of the repository as a whole both from a subjective and objective standpoint. In response to the computation of the first and second metrics, automatic operations can then be executed.

In a step 12, the process uses the flagging process for the purpose of computing a first metric - the ratio of all events recorded during a given appropriate time period which resulted in a document being flagged as "good", to the total number of documents flagged by the repository users. For instance, assuming that the repository contains a set of 1 000 000 documents, among which 500,000 documents were accessed. Assuming that 80 000 documents were flagged by the customers or the help-desk analysts and 20 000 documents were particularly flagged as "good". In this situation the computation of the first metric yields a result of GF/TF = 0.25.

It can be seen that this first metric yields a value which is representative of the evaluation of the whole repository, and not only one single document. This results from the fact that it is not one document which is flagged as such by the monitoring process. Rather, each separate flagging event is tracked and monitored, as were preceding events, in order to permit an analysis of the performance of the whole information retrieval system. Further, the first metric incorporates a representation of the value of the repository, as perceived by the customers or the users of the repository documents. Therefore, the first metric already represents a combination of the measure of the quality of the repository, both appreciated from an objective and subjective standpoint.

The evaluation is then completed, in a step 13, by a computation of a second metric which is representative of a more objective evaluation of the database. To achieve this, there is computed a measure of the depth of each document flagged as "good" within the list of items output to the users. More particularly, as soon as a document is flagged "good' by a user help-desk agent, the rank of this document within the list of items output to the user is recorded. The process then computes an average over an appropriate time period of the depth rank of all the documents having a good flag and this value is returned as the second metric. It can be seen that this second metric complements the first metric in order to provide an effective measurement of the performance of the information retrieval system.

In a first embodiment, any significant change brought to the first or second metrics can then be displayed to the system administrator as shown in step 14.

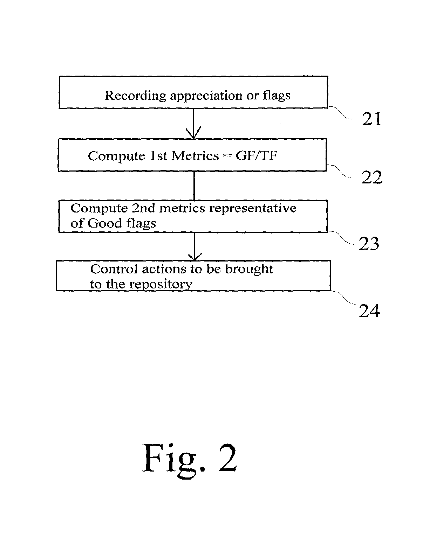

In a second embodiment, shown in figure 2, the measurement of the first and second metrics is used for controlling the maintenance of the repository. Step 21, 22 and 23 are identical to steps 11, 12 and 13 of figure 3. However, in this second embodiment, any significant change brought to the first or second metrics is automatically used to control maintenance operations which are brought to the repository of documents. Such maintenance operations may include the addition, modification or removal of documents, for instance. These relatively simple global metrics therefore provide an effective way of controlling the maintenance of the repository of documents, irrespective of the number of documents which are contained within the repository.

It should be noted that the technique involves the flagging of the information accesses as such and not the individual documents. This substantially improves the management. In one preferred embodiment, each document has a set of associated flags resulting from different users accessing and flagging the same document. Each event (access AND flag) is stored as a database record with an associated set of information fields. Using standard SQL queries, one can create different views into such a database to explore various aspects of the annotation events/process. The metrics representative of the quality of the system are computed from the analysis of the flagging (recorded in the database of events) for a relatively prolonged period of time assuming that the statistical confidence of results will grow with extension of this period. Capturing these values for a changing & evolving user community, evolving knowledge-base content and varying needs provides an on-going indication of the problem solving quality.

This gives rise to an effective knowledge base content management process based on a high value computing process of the different events being recorded during the access of the repository of documents. The described global performance metrics may well be applied for different knowledge bases, different search engines and varying user population.

The control of the maintenance of the repository may take different forms in accordance with the different embodiments.

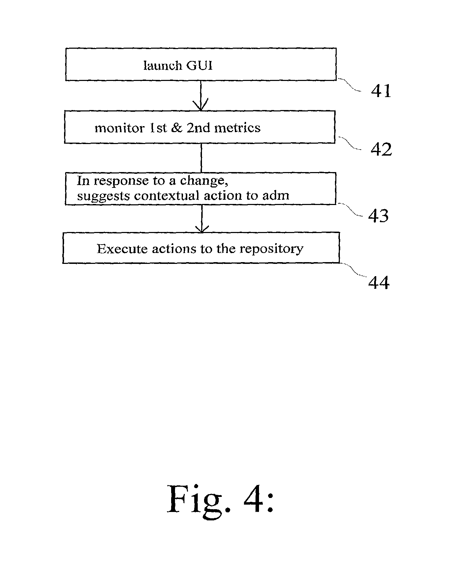

In one particular embodiment, shown in figure 4, there is provided a process which launches a Graphical User Interface (GUI) in a step 41 providing access to the first and second metrics. The Graphical User Interface is an environment which provides the repository administrator with the possibility to control actions to be performed on the repository, such as adding, changing or deleting documents from the repository. In a step 42, the first and second metrics are continuously monitored and each significant change brought to one of them, or to both, results in the proposal of an action in a step 43. If the action is confirmed by the repository administrator, then the process executes this action in a step 44. Preferably, the changes control the display or the highlighting of a button or specific menu which allows the administrator to take contextual specific actions on the system. Such actions may include the addition of one or more documents (or bundles of document relating to one specific area of knowledge) or also to delete documents for which no interest is being shown.

In one particular embodiment, the control of the maintenance of the repository of documents is performed on successive releases of that repository, including the documents or files therein included as well as the functionalities attached to those releases. Therefore, there is provided a very effective way of monitoring the change and evolution of an information retrieval system in active use.

It can be seen that the process provides a close appreciation of the effectiveness of the system, appreciated as a whole, i.e. including the repository of documents, the search and retrieval mechanisms and the users as well. It is therefore established a close control loop on the whole system and the maintenance of the repository is substantially facilitated. In particularly, the design improvement, the updates of the software release and the maintenance of the documents can be closely evaluated to ascertain that they match the goal set by the help-desk knowledge base administrator.

Many advantages result from the process described above. The maintenance of the repository is facilitated , and the performance of the overall system - including both the repository, the software release and the users - can be evaluated. The measuring process permits evaluation of the different releases and comparison of the performance of the repository when significant changes - either in the number of documents being published or in the functions authorized - are brought..

While the process which was described above is particularly adapted to the use of the two metrics which was disclosed above, it should be noticed that the process may be adapted to use more than two metrics. Further, whilst the techniques described above are particularly adapted to the arrangement of a large and sophisticated information retrieval system spread over a set of servers interconnected via a communication network, implementation of the measuring process within a stand-alone computer based information retrieval system is also, of course, possible. A stand-alone computer can incorporate a repository of problem-solving documents and the set of first and second metrics can then be advantageously used, for instance, for the purpose of ensuring that the whole system clearly matches the user's requirements. In response to any change to the first and second metrics, the user can be warned of the situation and, for instance, there might be provided means for automatically initiating a transaction with a outside server for the purpose of updating the repository of objects contained within the computer.

While the invention has been particularly described with reference to the arrangement of a repository of documents or electronic files, it is clear that the process can be straightforwardly adapted to any kind of content repository.

## Claims

1. A process for measuring the performance of an information retrieval system comprising a repository of content items associated with a search mechanism, said process comprising:
- when a content item is accessed by a user, recording an appreciation assigned by the user to that content item in relation to the access of the document;
- and using the recorded appreciations to calculate at least one global metric for the performance of the system.

2. A process as claimed in claim 1 wherein the appreciation takes the form of a flag being capable of being set at least positive or not positive and wherein the recorded appreciations are used to compute at least a first metric representative of, or derived from, a ratio of positive to non-positive appreciations for the repository.

3. A process as claimed in claim 1 or claim 2 wherein the search mechanism returns a rank for retrieved content items and wherein the recorded appreciation comprises the rank of content items, wherein the recorded appreciations are used to calculate a second metric representing, or derived from, an average rank of the content items when each such content item receive positive appreciations.

4. A process as claimed in any preceding claim comprising storing the appreciations in a database.

5. A process according to any preceding claim comprising detecting changes to at least one global metric and launching of a maintenance process of said repository in response to said detected changes.

6. A process as claimed in claim 5 wherein the detecting comprises presenting the at least one metric to an administrator via a user interface.

7. A process as claimed in claim 6 wherein the user interface allows the administrator to initiate a maintenance action.

8. A process as claimed in claim 5 where the maintenance process is initiated automatically.

9. A process according to any preceding claim wherein said repository is a repository of documents or electronic files.

10. A process for maintaining a repository of documents having a search engine for outputing lists of document in response to a query, said process comprising the following steps:
- recording the individual appreciation or flags individually assigned by the users;
- computing at least a first and a second metrics representative of the relevance of said repository; said first metrics being computed from the number of documents having received positive flags and said second metrics being representative of the average rank of the documents having received positive flags from the users;
- controlling an action brought to said repository in response to a change brought to said first or said second metrics.

11. Process according to claim 10 wherein said first metrics is computed as a ratio of the documents consulted and having received a positive flags versus the total number of documents consulted by the users.

12. Process according to claim 10 wherein said second metrics is computed as the average rank within the outputed results for all the documents having received a positive flag

13. Process according to claim 10 comprising presenting a graphical user interface for executing actions on said repository, said graphical user interface displaying said at least first and said second metrics to the user.

14. Process according to any preceding claim wherein said repository of documents is embodied within a stand-alone computer which is connected to a communication network and wherein a transaction with a server is automatically initiated in response to the detection of a change of said at least first and second metrics for the purpose of updating said repository.

15. Information Retrieval System **characterized in that** it includes means for performing the processes defined in claims 1 to 14.

16. An information retrieval system comprising:
a repository of content items associated with a search mechanism;
a user interface for presenting a content item to a user and for enabling the user to record an appreciation for that content item in relation to the access of the document; and
a management element for using the recorded appreciations to calculate at least one global metric for the performance of the system.

17. An information retrieval system as claimed in claim 16 wherein the appreciation takes the form of a flag being capable of being set at least positive or not positive and wherein the recorded appreciations are used to compute at least a first metric representative of, or derived from, a ratio of positive to non-positive appreciations for the repository.

18. An information retrieval system as claimed in claim 16 or claim 17 wherein the search mechanism returns a rank for retrieved content items and wherein the recorded appreciation comprises the rank of content items, wherein the recorded appreciations are used to calculate a second metric representing, or derived from, an average rank of the content items when each such content item receive positive appreciations.

19. An information retrieval system as claimed in any of claims 16 to 18 comprising storing the appreciations in a database.

20. An information retrieval system as claimed in any of claims 16 to 20 wherein the management element is arranged to detect changes to at least one global metric and launching of a maintenance process of said repository in response to said detected changes.

21. An information retrieval system as claimed in claim 20 comprising a user interface for presenting the at least one metric to an administrator via a user interface.

22. An information retrieval system as claimed in claim 21 wherein the user interface allows the administrator to initiate a maintenance action.

23. An information retrieval system as claimed in claim 20 wherein the maintenance process is initiated automatically.
